# EUROPEAN PATENT APPLICATION

(11) **EP 2 223 611 A1**
(43) Date of publication of application: **01.09.2010**
(21) Application number: 07817124.6
(22) Date of filing: 22.10.2007
(51) Int. Cl.: A23L 1/00

(54) **NATURAL NUTRITIONAL SUPPLEMENTARY FOOD OF ABELMOSCHUS MANIHOT (LINN.) MEDIUS**

(71) Applicant: Beijing Dongsheng Agricultural Technology Development (Group) Co., Ltd, Beijing 101105 (CN)
(72) Inventor: Wang Zhiyuan, Hebei 054200 (CN); Wang Shaozhang, Hebei 054200 (CN)
(74) Representative: Nevant, Marc
(86) International application number: PCT/CN2007/070933
(87) International publication number: WO 2009/052680

(57) **Abstract**

A natural nutritional supplementary food of Abelmoschus manihot (Linn.) medius. It comprises separating and classifying seed, flower, caudex and root of Abelmoschus manihot (Linn.) medius, then harvesting and processing. The materials are directly used as raw material product, or the materials separated and classified are used as filling in the proportion of 1%-20% respectively and added into food main materials.

## Description

### Field of the invention

The invention belongs to the field of food development and relates to a natural nutritional supplementary food.

### Background of the invention

Abelmoschus manihot (L.) Medicus of which the code is 6000010003 according to the China National Standard GB/T14467-93 implemented on January 1st, 1994 is called Kui in ancient time of China. Kui has been ranked number one among five edible vegetables in the *Medical Classic of the Yellow Emperor* one thousand years ago and the *Materia Madica of Food* has said Kui, namely abelmoschus manihot, is the monarch of all vegetables four hundred years ago. Hibiscus manihot mentioned in the literature the publication number of which is CN101002536A is a preferable variety among all varieties.

Generations of classic literatures of traditional Chinese medicine have specified Abelmoschus manihot is nontoxic and bland. The inventor has performed an investigation on a group of people who have eaten this plant. More than 30 years ago, people of the remote area of Taihang Mountain harvested entire Abelmoschus manihot plants, grinded the entire plants into fine powder, and mixed the fine powder with coarse grain flour, to take place of elm bark powder to make noodles. Besides the method of cooking twigs of entire plants as vegetables and grinding entire plants for edible purpose, classified use of harvested Abelmoschus manihot materials, conditional restrictions on proportioning and processing method in the method of use, and so on concerned in the invention have not been recorded in any literature and have no embodiment.

### Content of the invention

The invention aims at respectively processing and classifying harvested Abelhmoschus manihot products according to different characters of all tissues to make food raw materials, wherein corresponding applicable solutions are provided for specific methods applied to different foods.

A specific solution of using harvested Abelmoschus manihot products in food is **characterized in that** seeds, flowers, stems, and roots of Abelmoschus manihot plants are classified, organized, harvested and processed and the classified and the processed materials are directly used as raw materials for producing products or used as fillers that mixed with main food ingredients in the proportion of 1%∼20%.

Classified Abelmoschus manihot materials have three applications according to characters and component contents thereof: the first one is to use materials rich in edible gum and dietary fiber as dietary fiber fillers in food production, wherein this kind of materials includes crushed fresh Abelmoschus manihot straws or crushed dry Abelmoschus manihot straws, fresh or dry Abelmoschus manihot twigs, seedcases, calyx powder, and root powder all of which can replace one another in application; the second one is to use Abelmoschus manihot seed powder rich in natural vitamin E and highly-charged protein as protein fillers in food production; the third one is to use entire fresh/dry Abelmoschus manihot flowers or fragmental fresh/dry Abelmoschus manihot flowers rich in natural bioflavonoid and dietary fiber in food preparation as nut or dry fruit fillers.

When using Abelmoschus manihot ingredients as fillers to make food, the compositions thereof are as follows: 1∼5 parts of Abelmoschus manihot flower powder and 1∼5 parts of Abelmoschus manihot straw powder are mixed to form a filler; or 1∼5 parts of Abelmoschus manihot flower powder and 1∼5 parts of Abelmoschus manihot seed powder are mixed to form a filler; or 1∼5 parts of Abelmoschus manihot straw powder and 1∼5 parts of Abelmoschus manihot seed powder are mixed to form a filler; or 1∼5 parts of Abelmoschus manihot flower powder, 1∼5 parts of Abelmoschus manihot straw powder, and 1∼5 parts of Abelmoschus manihot seed powder are mixed to form a filler.

All classified Abelmoschus manihot fillers are filled to the main food ingredient in such a way that firstly the Abelmoschus manihot fillers are well mixed with dry solid filler or liquid main food ingredient and then a proper amount of water is added to perform the next process.

When the Abelmoschus manihot fillers are used in drinks and beverage, the Abelmoschus manihot fillers are directly added into wine or water and stirred to obtain the finished product or after the Abelmoschus manihot fillers are stirred in wine or water, the Abelmoschus manihot fillers are separated out to obtain the finished product.

The temperature must be controlled below 118 degrees centigrade during sterilization or processing and the duration should be less than 58 minutes when the temperature is more than 100 degrees centigrade.

The classified materials or ingredients have directional selections according to different food varieties and different characters of main food ingredients and the methods of using the materials or ingredients should agree with the selected directions.

Relevant tissues of edible harvested Abelmoschus manihot products are classified, organized and encoded for convenience of use and statement, which is called encoding materials or material encoding.
No. 1 Entire fresh/dry Abelmoschus manihot flower
No. 2 Fragmental fresh/dry Abelmoschus manihot flower
No. 3 Crushed fresh/dry Abelmoschus manihot straw
No. 4 Abelmoschus manihot seed powder
No. 5 Fresh/dry Abelmoschus manihot twig, seedcase, calyx powder
No. 6 Abelmoschus manihot root powder

The fresh Abelmoschus manihot flowers or tissue fragments and fresh twigs, seedcases, calyxes, and so on have proportions measured in terms of dewatered products; water contents namely proportions of removed water of different fresh materials are as follows: the water content of the No. 2 fragmental fresh Abelmoschus manihot flower or fresh Abelmoschus manihot flower is 78∼88%, the water content of the No. 3 fresh straw is 69∼83%, the water content of the No. 5 fresh twig is 70∼83%, and the water content of the seedcase and flower and calyx is 60∼78%.

The materials are divided into three kinds according to characters and component contents thereof, wherein the first kind includes materials rich in edible gum and dietary fibre which are mainly used as dietary fibre fillers in food production; this kind of materials includes the No. 3, No. 5 and No. 6 materials all of which can replace one another in use; the second kind includes the No. 4 seed powder rich in natural vitamin E and highly-charged protein, wherein this kind of materials is used as protein fillers in food production; the third kind includes the No. 1 Abelmoschus manihot flower and No. 2 fragmental Abelmoschus manihot flower rich in natural bioflavonoid and dietary fibre, wherein this kind of material is used as nut or dry fruit fillers when making food.

The Hibiscus manihot mentioned in the background of the invention is a preferable variety among the varieties of Abelmoschus manihot.
Specifically when producing food, a method of using Abelmoschus manihot materials as fillers is processing chosen proportioned ingredients under restricted condition.
1. In the process of producing food like cooked wheaten or grain food or cakes, 1∼20% the first kind of Abelmoschus manihot materials or 1∼20% the third kind of Abelmoschus manihot materials or 1∼10% the first kind of Abelmoschus manihot materials and 1∼10% the second kind of Abelmoschus manihot materials are added into the main ingredient of the corresponding food. Rice noodles, wheat flour dried noodles, rice flour, grains, dried noodles, and grain cakes are produced respectively from different grain raw materials.
2. In the process of producing food or cakes made of flour mixture of wheat flour, grain flour and bean flour, 1∼20% the second kind of Abelmoschus manihot fillers or 1∼20% the second kind of Abelmoschus manihot fillers and 1∼20% the first kind of Abelmoschus manihot fillers or 1∼10% the second kind of Abelmoschus manihot fillers and 1∼10% the first kind of Abelmoschus manihot fillers are added.
3. In the process of producing drinks and beverage containing Abelmoschus manihot materials, 1∼20% the third kind of Abelmoschus manihot fillers is added.
4. In the process of producing cold drinks and candies, 5∼10% the third kind of Abelmoschus manihot materials and 5∼10% the second kind of Abelmoschus manihot materials or 5∼18% the third kind of Abelmoschus manihot materials is added.
5. In the process of producing flour food, cakes, and beverage, the corresponding fillers are added in required proportion into the main food ingredient according to customers' requirements for flavour and nutrition.
6. When using relevant harvested Abelmoschus manihot products as fillers in different proportions according to different kinds of food, the method of use thereof has the following conditional restrictions: □ the Abelmoschus manihot fillers are added into the main food ingredient in such a way that dry Abelmoschus manihot fillers are added into dry main food ingredient and dry-mixed well and then water or other liquid food raw materials are added to perform the next process; □ a drying process in processing food made of flour, baking, steaming, and boiling processes in processing cakes, and a sterilizing process in processing beverage and cold food should avoid flame and direct light, the temperature should be controlled below 118 degrees centigrade, and the duration of single heat should be less than 58 minutes when the temperature is more than 100 degrees centigrade, □ when relevant harvested Abelmoschus manihot products are added into liquid main food ingredient, the liquid main food ingredient and harvested Abelmoschus manihot products are mixed well first and then water is added.
   The Hibiscus manihot mentioned in the background of the invention is a preferable variety among the varieties of Abelmoschus manihot.

### Beneficial effects

Products of the invention are natural nutritional supplementary food that respectively supplement natural highly-charged bioflavonoid, natural vitamin E, dietary fibre, and complete amino acid protein.

The method of the invention lays the basic material conditions for use of Abelmoschus manihot ingredients as fillers by classification and organization of the harvested Abelmoschus manihot products; the proportion of fillers provided by the method is the best choice for the flavour of the corresponding product; the way of adding and mixing fillers provided by the method guarantees the fabrication process reaches the purpose of well mixing for products. Otherwise it is difficult to make corresponding products due to the features of the Abelmoschus manihot materials. For example the Abelmoschus manihot materials will expand and automatically agglomerate as soon as it meets water that it is hard to be mixed well with the main food ingredient. The temperature and time control in the process provided by the invention effectively guarantees the original characters of the Abelmoschus manihot fillers are kept the same and the original constituents are not lost so as to guarantee the natural flavour and nutrition, otherwise the vegetable gum and natural bioflavonoid of the abelmoschus maniho material can be totally denatured by processing whereby the flavour of food is totally ruined and it is even harder to bring the nutrient functions into play.

All solutions on using abelmoschus maniho materials to make food are compared with one another for thousands of times and the invention is the best choice in the view of cost accounting and flavour in application.

The Hibiscus manihot mentioned in the background of the invention is a preferable variety among the varieties of Abelmoschus manihot.

### Detailed Description of the Preferred and Alternate Embodiments

### Embodiment

Embodiment 1: put 100kg of water and 6kg of the No. 2 Abelmoschus manihot filler, namely tissue fragments of dry Abelmoschus manihot flowers in an enamel pot together and stir the materials well, and then sterilize the materials at intervals for 12 times to obtain 106kg of beverage, wherein every sterilization is performed for not more than 1 minute at the temperature of 100 degrees centigrade.

Embodiment 2: put 100kg of water and 30kg of No. 1 Abelmoschus manihot filler, namely entire fresh Abelmoschus manihot flowers in a stainless steel pot, heat the materials to 70 degrees centigrade, keep the temperature for 60 minutes, stir the materials at a speed of 80rmp for 10 minutes, and then filtering out 80kg of leachate of Abelmoschus manihot flowers from the pot, put 80kg of water into the pot again, repeat the above processes, squeeze water out of the Abelmoschus manihot flowers that are dipped in water so as to obtain water squeezed out of the fresh flowers and maceration extraction of flowers that totally weigh 140kg, and after mixing the 80kg liquid with the 140kg liquid well, sterilize the mixture at a controlled temperature of 100 degrees centigrade at intervals for 10 times to obtain 220kg of beverage wherein every sterilization is performed for 58 seconds.

Embodiment 3: first well mix 100kg of wheat flour, 1kg of No. 2 Abelmoschus manihot filler, namely tissue fragments of Abelmoschus manihot flowers, and 6kg of No. 3 Abelmoschus manihot filler, namely Abelmoschus manihot straw powder when the materials are dry, put the mixture in a flour mixer and add 32kg of water, and then knead a dough to make wet noodles, dry the wet noodles at 60 degrees centigrade for 4 hours to obtain 106.5kg of dried wheaten noodles, and pack the dried noodles for future use.

Embodiment 4: first well mix 20kg of bean flour, 10kg of millet flour, 20kg of rice flour, 30kg of wheat flour, 10kg of mung bean flour, 80kg of No. 3 Abelmoschus manihot filler, namely Abelmoschus manihot seed powder, and 2kg of No. 6 Abelmoschus manihot filler, namely Abelmoschus manihot root powder when the materials are dry, add 30kg of water to knead a dough, make cakes and cookies, and dry the cakes and cookies at 90 degrees centigrade to obtain 172 kilograms of finished products.

Embodiment 5: firstly well mix 100kg of fresh milk, 10kg of No. 4 Abelmoschus manihot filler, namely Abelmoschus manihot seed powder, and 8kg of No. 6 Abelmoschus manihot filler, namely Abelmoschus manihot root powder, add 100kg of water to mix well with the materials, put the materials in a sterilizing pan, sterilize the materials at the temperature of 100 degrees centigrade for 1 minute, and then sterilize the materials at the temperature of 98 degrees centigrade for 1 hour, finally directly use the materials to make icecream.

Embodiment 6: well mix 100kg of rice flour, 9kg of No. 2 Abelmoschus manihot filler, namely tissue fragments of fresh Abelmoschus manihot flowers, and 7kg of No. 3 Abelmoschus manihot filler, namely Abelmoschus manihot straw powder, add 36kg of water, knead a dough with the materials to make rice flour noodles, and dry wet rice flour noodles at 80 degrees centigrade for 2 hours to obtain 116kg of rice noodles. Embodiment 7: a conference was held in an Abelmoschus manihot breeding base. Customers proposed tasting every kind of Abelmoschus manihot-flavoured pastry and food made of flour. The kitchen prepared to use four compositions of the Abelmoschus manihot materials. To form a composition, a medium amount of 1∼5 parts of the first Abelmoschus manihot filler, namely 2.5 parts, a maximum amount of the second Abelmoschus manihot filler or the mixture of the second Abelmoschus manihot filler and the third Abelmoschus manihot filler, namely 5 parts, was taken. All compositions were proportioned in this way, and then the fillers were mixed into different food made of flour and different cake ingredients in the proportion of 10% so as to make several dozens kinds of food. The food got a round of applause.

## Claims

**1.** A specific solution of using harvested Abelmoschus manihot plant products in food, wherein seeds, flower, stems, and roots of Abelmoschus manihot plants are classified, organized, harvested, and processed; the classified and processed materials are directly used as raw materials for producing products or used as fillers that are mixed with main food ingredients in the proportion of 1%∼20%.

**2.** The solution according to claim 1, wherein classified Abelmoschus manihot materials have three applications according to characters and component contents thereof: the first one is to use materials rich in edible gum and dietary fiber as dietary fiber fillers in food production, wherein this kind of materials includes crushed fresh Abelmoschus manihot straws or crushed dry Abelmoschus manihot straws, fresh or dry Abelmoschus manihot twigs, seedcases, calyx powder, and root powder all of which can replace one another in application; the second one is to use Abelmoschus manihot seed powder rich in natural vitamin E and highly-charged protein as protein fillers in food production; the third one is to use entire fresh/dry Abelmoschus manihot flowers or fragmental fresh/dry Abelmoschus manihot flowers rich in natural bioflavonoid and dietary fiber in food preparation as nut or dry fruit fillers.

**3.** The solution according to claim 1, wherein, when using Abelmoschus manihot ingredients as fillers to make food, the compositions thereof are as follow: 1∼5 parts of Abelmoschus manihot flower powder and 1∼5 parts of Abelmoschus manihot straw powder are mixed to form a filler; or 1∼5 parts of Abelmoschus manihot flower powder and 1∼5 parts of Abelmoschus manihot seed powder are mixed to form a filler; or 1 -5 parts of Abelmoschus manihot straw powder and 1∼5 parts of Abelmoschus manihot seed powder are mixed to form a filler; or 1∼5 parts of Abelmoschus manihot Mower powder, 1∼5 parts of Abelmoschus manihot straw powder, and 1∼5 parts of Abelmoschus manihot seed powder are mixed to form a filler.

**4.** The solution according to claim 1, wherein all classified Abelmoschus manihot fillers are filled to the main food ingredient in such a way that firstly the Abelmoschus manihot fillers are well mixed with dry solid filler or liquid main food ingredient and then a proper amount of water is added to perform the next process.

**5.** The solution according to claim 1, wherein, when the Abelmoschus manihot fillers are used in drinks and beverage, the Abelmoschus manihot fillers are directly added into wine or water and stirred to obtain the finished product or after the Abelmoschus manihot fillers are stirred in wine or water, the Abelmoschus manihot fillers are separated out to obtain the finished product.

**6.** The solution according to claim 1, wherein the temperature must be controlled below 118 degrees centigrade during sterilization or processing and the duration should be less than 58 minutes when the temperature is more than 100 degrees centigrade.

**7.** The solution according to claim 1, wherein the classified materials or ingredients have directional selections according to different food varieties and different characters of main food ingredients and the methods of using the materials or ingredients should agree with selected directions.

## Amended claims

### Amended claims under Art. 19.1 PCT

1. A specific method of applying the harvest of Abelmoschus manihot plant into traditional food raw material, **characterized in that**: classifying, arranging, harvesting and processing the seeds, flowers, stems and roots of Abelmoschus manihot to produce products directly as raw materials or add the materials by 1%∼20% proportion respectively into major ingredient of food as filler.

2. The solution according to claim 1, wherein classified Abelmoschus manihot materials have three applications according to characters and component contents thereof: the first one is to use materials rich in edible gum and dietary fiber as dietary fiber fillers in food production, wherein this kind of materials includes crushed fresh Abelmoschus manihot straws or crushed dry Abelmoschus manihot straws, fresh or dry Abelmoschus manihot twigs, seedcases, calyx powder, and root powder all of which can replace one another in application; the second one is to use Abelmoschus manihot seed powder rich in natural vitamin E and highly-charged protein as protein fillers in food production; the third one is to use entire fresh/dry Abelmoschus manihot Mowers or fragmental fresh/dry Abelmoschus manihot flowers rich in natural bioflavonoid and dietary fiber in food preparation as nut or dry fruit fillers.

3. The solution according to claim 1, wherein, when using Abelmoschus manihot ingredients as fillers to make food, the compositions thereof are as follows: 1∼5 parts of Abelmoschus manihot flower powder and 1∼5 parts of Abelmoschus manihot straw powder are mixed to form a filler; or 1∼5 parts of Abelmoschus manihot flower powder and 1∼5 parts of Abelmoschus manihot seed powder are mixed to form a filler; or 1∼5 parts of Abelmoschus manihot straw powder and 1∼5 parts of Abelmoschus manihot seed powder are mixed to form a fitter; or 1∼5 parts of Abelmoschus manihot flower powder, 1∼5 parts of Abelmoschus manihot straw powder, and 1∼5 parts of Abelmoschus manihot seed powder are mixed to form a filler.

4. The solution according to claim 1, wherein all classified Abelmoschus manihot fillers are filled to the main food ingredient in such a way that firstly the Abelmoschus manihot fillers are well mixed with dry solid filler or liquid main food ingredient and then a proper amount of water is added to perform the next process.

5. The solution according to claim 1, wherein, when the Abelmoschus manihot fillers are used in drinks and beverage, the Abelmoschus manihot fillers are directly added into wine or water and stirred to obtain the finished product or after the Abelmoschus manihot fillers are stirred in wine or water, the Abelmoschus manihot fillers are separated out to obtain the finished product.

6. The solution according to claim 1, wherein the temperature must be controlled below 118 degrees centigrade during sterilization or processing and the duration should be less than 58 minutes when the temperature is more than 100 degrees centigrade.

7. The solutions according to claim 1, wherein the classified materials or ingredients have directional selections according to different food varieties and different characters of main food ingredients and the methods of using the materials or ingredients should agree with selected directions.
**Statement made according to Item (1), Art. 19 of PCT**
The comparative document on the theme of natural Abelmoschus manihot nutritional food is a high grade product and the invention applies for a method of producing low grade product. The former is the Abelmoschus manihot materials for making food or a combination of the materials thereof and the later is the specific method of using the materials and ingredients of the former in traditional food raw materials as fillers. The inventor of the comparative document and the applicant of the invention are the same team of inventors who know the differences between all the inventions mentioned above well. The novelty and creativeness of the present invention are reflected in providing the specific solution of supplementing corresponding natural bioflavonoid, natural vitamin E, dietary fibre, and complete amino acid to traditional food so as to guarantee natural flavour and original characters of nutrition supplemented to the food are not changed.
According to the content of the search report, a specific solution of use in food on the first line of the original claim 1 is revised as a specific method of applying ingredients into traditional food raw material. A replacement sheet is submitted for this revision.
